**Europäisches Patentamt**

**European Patent Office**

**Office européen des brevets**

(19)

(11) Veröffentlichungsnummer: **0 411 555 A1**

## (12) EUROPÄISCHE PATENTANMELDUNG

(21) Anmeldenummer: **90114651.4**

(22) Anmeldetag: **31.07.90**

(51) Int. Cl.5: **C08B 31/00, C08H 1/02**

(30) Priorität: **31.07.89 HU 390789**

(43) Veröffentlichungstag der Anmeldung:
**06.02.91 Patentblatt 91/06**

(84) Benannte Vertragsstaaten:
**AT BE CH DE DK ES FR GB GR IT LI LU NL SE**

(71) Anmelder: **MüANYAGIPARI KUTATO INTEZET**
**Hungária körut 114**
**H-1950 Budapest(HU)**

(72) Erfinder: **Simon, Artur Dr.**
**Ali u. 4,**
**H-1025 Budapest(HU)**
Erfinder: **Zombori-Simon, Eva**
**Kalman l.u. 19,**
**H-1052 Budapest(HU)**

(74) Vertreter: **Beszédes, Stephan G., Dr.**
**Patentanwalt**
**Münchener Strasse 80a Postfach 1168**
**D-8060 Dachau(DE)**

(54) Verfahren zur Herstellung von Kunststoffrohstoffen.

(57) Gegenstand der Erfindung ist ein Verfahren zur Herstellung von Kunststoffrohstoffen durch Umsetzen von Amino- oder Hydroxygruppen aufweisenden, aus Pflanzensamen gewonnenen Produkten, bei welchem

a) 1 oder mehr Aminogruppen aufweisende[s], aus Pflanzensamen gewonnene[s] Ausgangsprodukt(e) in wäßrigem Medium mit 1 oder mehr Oxoverbindung(en) und gegebenenfalls gleichzeitig oder anschließend mit 1 oder mehr Aminogruppen aufweisenden Verbindung-(en) umgesetzt wird beziehungsweise werden oder

b) 1 oder mehr Hydroxygruppen aufweisende[s], aus Pflanzensamen gewonnene[s] Ausgangsprodukt(e) in wäßrigem Medium mit 1 oder mehr Aminogruppen aufweisenden Verbindung(en) und gegebenenfalls gleichzeitig oder anschließend mit 1 oder mehr Oxoverbindung(en) umgesetzt wird beziehungsweise werden und/oder gegebenenfalls der beziehungsweise die so erhaltene[n] makromolekulare-(n) Stoff(e) mit 1 oder mehr Oxoverbindung(en) zur Reaktion gebracht wird beziehungsweise werden oder

c) 1 oder mehr Hydroxygruppen aufweisende[s], aus Pflanzensamen gewonnene[s] Ausgangsprodukt(e) in wäßrigem Medium mit 1 oder mehr Oxogruppen aufweisenden Verbindung(en) und gegebenenfalls gleichzeitig oder anschließend mit 1 oder mehr Aminogruppen aufweisenden Verbindung(en) umgesetzt beziehungsweise werden und/oder gegebenenfalls der beziehungsweise die so erhaltene makromolekulare Stoff(e) mit 1 oder mehr Aminogruppen aufweisenden Verbindung(en) zur Reaktion gebracht wird beziehungsweise werden sowie der beziehungsweise die so erhaltene(n) makromolekulare-(n) Stoff (e) in an sich bekannter Weise zu Kunststoffrohstoffen zubereitet beziehungsweise geformt wird beziehungsweise werden.

## VERFAHREN ZUR HERSTELLUNG VON KUNSTSTOFFROHSTOFFEN

Die Erfindung betrifft ein Verfahren zur Herstellung von Kunststoffrohstoffen durch Umsetzen von Amino- oder Hydroxygruppen aufweisenden, aus Pflanzensamen gewonnenen Produkten.

Es ist bekannt, daß die Samen mancher Pflanzen 9 bis 13 Gew.-%, in manchen Fällen bis zu 20 Gew.-% Eiweiß enthalten. Ferner ist bekannt, daß das Eiweiß in den Pflanzensamen nicht gleichmäßig verteilt ist. Das meiste Eiweiß befindet sich in dem aus den Samen gewonnenen Mehl, in der Kleie ist weniger Eiweiß enthalten. Weiterhin ist bekannt, daß die Eiweiße Aminogruppen, die mit geeigneten Chemikalien reagieren, aufweisen. Zum Beispiel wird der Kleber mancher Getreidearten durch Äthylenoxyd und Äthylenimid modifiziert (Dr. R. Lásztity: Gabonafehérjék [ = Getreideeiweiße], Seite 171, Mezőgazdasági kiadó, 1981). Es ist auch bekannt, die Reaktion der Aminogruppen von in der Natur vorkommenden Stoffen mit unterschiedlichen Chemikalien zur Herstellung von Kunststoffen zu nutzen. Zum Beispiel wird aus dem Casein der Milch das sogenannte Galalith (Kunsthorn) hergestellt (Encyclopedy of Polymer Sciences and Technology, Intersci. Publ., New York, 1965, Vol. II, Seite 696).

Die Stärken bestehen aus kondensierten D-Glucose-Molekülen und weisen pro Glucoseeinheit 2 Hydroxygruppen und eine Methylgruppe auf. Es ist bekannt, daß diese Gruppen in unterschiedlichem Maße mit geeigneten Chemikalien, zum Beispiel mit Aminogruppen aufweisenden Verbindungen, reagieren. Es sind auch Reaktionen bekannt, an denen die Stärke ohne Abbau teilnimmt. Mit Isocyanaten und Harnstoff bildet sie bei 90 bis 110°C unter Abspaltung von Ammoniak zum Beispiel Stärkecarbamat. Formaldehyd reagiert je nach den Bedingungen, die bei den bekannten Verfahren stets die Anwendung von höheren Temperaturen umfaßten, in wasserfreiem Medium mit 1 oder 2 funktionellen Gruppen der Stärke zu Halbacetal beziehungsweise Acetal (G. N. H. von Beynum, J. Roels: Starch Conversion Technology, Marcel Dekker Inc. N.Y. 1985, Seiten 480 bis 483, und R. L. Whistler, E. F. Paschall: Starch Chemistry and Technology, Academic Press N.Y. 1965, Seite 311). Diese Produkte werden in der Lebensmittelindustrie, als Druckpaste in der Textilindustrie und als Elektrolyt für Alkalibatterien verwendet.

Der Erfindung liegt die Aufgabe zugrunde, ein Verfahren zur Herstellung von Kunststoffrohstoffen durch Umsetzen von Amino- oder Hydroxygruppen aufweisenden, aus Pflanzensamen gewonnenen Produkten, durch welches Kunststoffe mit einer den bisher bekannten Kunststoffen fehlenden Eigenschaft, nämlich der schnellen Zersetzung im Boden bei Entstehen von nur den Boden nicht schädigenden Stoffen und gleichzeitigem Bewahren ihrer mechanischen Festigkeit an der Atmosphäre über lange Zeit hinweg, erhalten werden können, zu schaffen.

Das Obige wurde überraschenderweise durch die Erfindung erreicht.

Grundlage der Erfindung ist die überraschende Feststellung, daß aus aus Pflanzensamen hergestellten Produkten unter Verwendung leicht zugänglicher Chemikalien thermoplastische und duroplastische Kunststoffrohstoffe hergestellt werden können und die aus diesen gefertigten Kunststoffe eine beträchtliche mechanische Festigkeit aufweisen, im Boden jedoch - gewünschtenfalls - innerhalb kurzer Zeit zersetzt werden. Dazu reagieren überraschenderweise die aus Pflanzensamen hergestellten Produkte, wie Stärke, mit den Oxoverbindungen, wie Formaldehyd, beziehungsweise Aminogruppen aufweisenden Verbindungen, wie Harnstoff, unter Ausbildung von mehr oder minder langen Ketten, wobei ihre Moleküle verbunden und dadurch Makromoleküle gebildet werden, die unter der Wirkung von Wärme und Druck zur Teilnahme an weiteren Kondensationsprozessen befähigt sind. Überraschend gegenüber dem Stand der Technik ist auch, daß die so erhaltenen makromolekularen Stoffe zu Kunststoffrohstoffen zubereitet beziehungsweise geformt, zum Beispiel getrocknet und zerkleinert beziehungsweise gemahlen, werden können. Die Erfindung beruht weiterhin auf der Feststellung, daß die mechanische Festigkeit sowie die Zersetzungszeit im Boden durch entsprechende Wahl des Verhältnisses der Bestandteile innerhalb eines breiten Bereiches variiert werden können.

Diese Feststellungen sind überraschend, weil manche der aus Pflanzensamen gewonnenen Produkte, zum Beispiel das Mehl, die Kleie und die Stärke, seit langem bekannt sind und auch die moderne Wissenschaft außerordentlich viele Kenntnisse in diesem Themenkreis veröffentlicht, bisher jedoch nichts darüber bekannt geworden ist, daß aus diesen Produkten auch Rohstoffe für die Kunststofftechnik beziehungsweise -industrie herstellbar sind.

Gegenstand der Erfindung ist daher ein Verfahren zur Herstellung von Kunststoffrohstoffen durch Umsetzen von Amino- oder Hydroxygruppen aufweisenden, aus Pflanzensamen gewonnenen Produkten, welches dadurch gekennzeichnet ist, daß, zweckmäßig bei Temperaturen bis 40°C, vorzugsweise bei Temperaturen von 10 bis 30°C, insbesondere bei Raumtemperatur,

a) 1 oder mehr Aminogruppen aufweisende[s], aus Pflanzensamen gewonnene[s] Ausgangsprodukt(e) in wäßrigen Medium mit 1 oder mehr Oxoverbindung(en) und gegebenenfalls gleichzeitig oder anschließend mit 1 oder mehr Aminogruppen aufweisenden Verbindung(en) umgesetzt wird beziehungsweise werden oder

b) 1 oder mehr Hydroxygruppen aufweisende[s], aus Pflanzensamen gewonnene[s] Ausgangsprodukt(e) in wäßrigem Medium mit 1 oder mehr Aminogruppen aufweisenden Verbindung(en) und gegebenenfalls gleichzeitig oder anschließend mit 1 oder mehr Oxoverbindung(en) umgesetzt wird beziehungsweise werden und/oder gegebenenfalls der beziehungsweise die so erhaltene(n) makromolekulare(n) Stoff(e) mit 1 oder mehr Oxoverbindung(en) zur Reaktion gebracht wird beziehungsweise werden oder

c) 1 oder mehr Hydroxygruppen aufweisende[s], aus Pflanzensamen gewonnene[s] Ausgangsprodukt(e) in wäßrigem Medium mit 1 oder mehr Oxogruppen aufweisenden Verbindung(en) und gegebenenfalls gleichzeitig oder anschließend mit 1 oder mehr Aminogruppen aufweisenden Verbindung(en) umgesetzt wird beziehungsweise werden und/oder gegebenenfalls der beziehungsweise die so erhaltene(n) makromolekulare(n) Stoff(e) mit 1 oder mehr Aminogruppen aufweisenden Verbindung(en) zur Reaktion gebracht wird beziehungsweise werden sowie der beziehungsweise die so erhaltene(n) makromolekulare(n) Stoff(e) in an sich bekannter Weise zu Kunststoffrohstoffen zubereitet beziehungsweise geformt wird beziehungsweise werden.

Zweckmäßig wird das Zubereiten beziehungsweise Formen des beziehungsweise der als Reaktionsprodukt(e) erhaltenen makromolekularen Stoffe[s] zu Kunststoffrohstoffen durch Zusatz von 1 oder mehr Gleitmittel(n), Stabilisator(en) und/oder Farbstoff(en) sowie Homogenisieren durchgeführt.

Vorzugsweise wird beziehungsweise werden als Oxoverbindung(en) [ein] Aldehyd(e) und/oder Keton(e) verwendet.

Es ist auch bevorzugt, als Aminogruppen aufweisende Verbindung(en) Harnstoff und/oder Melamin zu verwenden.

Gegebenenfalls wird auch eine organische Carbonsäure, vorzugsweise Dicarbonsäure, beispielsweise Oxalsäure, mit verwendet.

Zweckmäßig wird beziehungsweise werden bei der Variante a) des erfindungsgemäßen Verfahrens als aus Pflanzensamen gewonnene[s] Ausgangsprodukt(e) Mehl und/oder Kleie verwendet.

Ferner ist es zweckmäßig, bei den Varianten b) und c) des erfindungsgemäßen Verfahrens als aus Pflanzensamen gewonnenes Ausgangsprodukt Stärke zu verwenden.

Nach einer bevorzugten Ausführungsform der Variante a) des erfindungsgemäßen Verfahrens wird beziehungsweise werden je 100 g aus Pflanzensamen gewonnene[s] Ausgangsprodukt(e) 0,3 bis 1 Mol der Oxoverbindung(en) und 0,4 bis 3 Mol der gegebenenfalls verwendeten Aminogruppen aufweisenden Verbindung(en) eingesetzt.

Gemäß einer bevorzugten Ausführungsform der Variante b) des erfindungsgemäßen Verfahrens wird beziehungsweise werden je 100 g aus Pflanzensamen gewonnene[s] Ausgangsprodukt(e) 0,15 bis 1,5 Mol der Aminogruppen aufweisenden Verbindung(en) und 0,18 bis 3,0 Mol der gegebenenfalls ·verwendeten Oxoverbindung(en) eingesetzt.

Nach einer bevorzugten Ausführungsform der Variante c) des erfindungsgemäßen Verfahrens wird beziehungsweise werden je 100 g aus Pflanzensamen gewonnene[s] Ausgangsprodukt(e) 0,18 bis 3,0 Mol der Oxoverbindung(en) und 0,15 bis 1,5 Mol der gegebenenfalls verwendeten Aminogruppen aufweisenden Verbindung(en) eingesetzt.

Gemäß einer anderen bevorzugten Ausführungsform des erfindungsgemäßen Verfahrens wird als Ausgangsprodukte ein Gemisch aus 1 oder mehr Hydroxygruppen aufweisenden und Aminogruppen aufweisenden, aus Pflanzensamen gewonnenen Ausgangsprodukten verwendet.

Duroplastische Produkte werden erhalten, wenn die aus Pflanzensamen gewonnenen Ausgangsprodukte mit Reagenzien beider Typen, das heißt mit Oxoverbindungen und mit Aminogruppen aufweisenden Verbindungen, umgesetzt werden.

Einer der Vorteile des erfindungsgemäßen Verfahrens besteht darin, daß die nach diesem hergestellten Kunststoffe im Boden beziehungsweise durch die Einwirkung von Mikroorganismen innerhalb kurzer Zeit zu Produkten, die den Boden nicht schädigen und nicht entfernt werden müssen, abgebaut werden. Daher können die so hergestellten Kunststoffe zur Herstellung von zur Anzucht und zum Auspflanzen pflanzlicher Kulturen geeigneten Kulturgefäßen und sonstigen landwirtschaftlichen Geräte verwendet werden. Vorteilhaft ist ferner, daß die mechanische Festigkeit der Produkte und die Zeit, innerhalb derer sie im Boden abgebaut werden, innerhalb eines breiten Bereiches variierbar sind, wodurch den speziellen Ansprüchen der unterschiedlichen Pflanzenkulturen weitgehend entsprochen werden kann. Aus den erfindungsgemäß hergestellten Produkten können Gegenstände, so auch Pflanzenanzuchtgefäße, beliebiger Größe und Form hergestellt werden und auf diese Weise können der optimale Platzbedarf der Pflanzen und eine maximale Aus nutzung des Raumes gewährleistet werden. Ein weiterer Vorteil des Verfahrens ist, daß die aufgeführten Vorteile nicht mit aufwendigen, sondern mit einfachen Mitteln und Stoffen erzielt werden.

Die Erfindung wird an Hand der folgenden Beispiele näher erläutert. Die in den Beispielen angegebenen Zerreißfestigkeitswerte wurden mit einer Zerreißmaschine des Typs JJ Lloyd T 5002 gemessen. Der Abbau im Boden wurde unter Gewächshausbedingungen an in den Boden eingesenkten Platten und becherförmigen Gefäßen gemessen.

### Beispiel 1

250 g Weizenmehl werden mit 260 ml einer 37 gew.-%-igen wäßrigen Formaldehydlösung (Formalin) (im folgenden wird immer mit dieser Konzentration gearbeitet) und mit 300 ml einer 120 g Harnstoff enthaltenden Lösung vermischt. Dann werden 100 ml Wasser, 1 ml Speiseöl, 0,1 g Natriumbicarbonat (NaHCO$_3$) und 1 g Natriumstearat zugegeben. Das Gemisch wird 30 Minuten lang gerührt, dann getrocknet und im lufttrockenen Zustand in einer Hammermühle gemahlen. Aus dem erhaltenen Pulver wird in einem auf 200°C geheizten Preßwerkzeug mit einem Druck von 400 kp/cm$^2$ eine Platte gepreßt, deren Zerreißfestigkeit 15 N/mm$^2$ beträgt. In Wasser getaucht wird die Platte in 3 Stunden weich. Die Abbauzeit im Boden beträgt 20 Wochen.

### Beispiel 2

Man arbeitet auf die im Beispiel 1 beschriebene Weise, verwendet jedoch statt Weizenmehl extrahiertes Sojamehl. Die Zerreißfestigkeit der Platte beträgt 20 N/mm$^2$, in Wasser erweicht sie in 240 Stunden, im Boden wird sie innerhalb von 9 Monaten abgebaut.

### Beispiel 3

Ein Gemisch aus 112 g extrahiertem Sojamehl, 112 g Weizenmehl, 234 ml einer 37 gew.-%-igen wäßrigen Formaldehydlösung, 108 g Harnstoff, 9o ml Wasser, 0,2 g Natriumbicarbonat und 1 g Natriumstearat wird 30 Minuten lang gerührt, dann bei 50°C getrocknet und in der Hammermühle gemahlen. Die Zerreißfestigkeit der aus diesem Material gepreßten Platte beträgt 22 N/mm$^2$. In Wasser getaucht quillt die Platte in 100 Stunden um etwa 10%. Die Abbauzeit im Boden beträgt 20 Wochen.

### Beispiel 4

Man arbeitet auf die im Beispiel 3 beschriebene Weise, verwendet jedoch 117 ml einer 37 gew.-%-igen wäßrigen Formaldehydlösung und 54 g Harnstoff. Die Zerreißfestigkeit der erhaltenen Platte beträgt 16 N/mm$^2$. In Wasser quillt die Platte in 100 Stunden auf etwa das Doppelte ihrer Dicke. Die Abbauzeit im Boden beträgt 12 Monate.

### Beispiel 5

Man arbeitet auf die im Beisriel 1 beschriebene Weise, verwendet statt Weizenmehl jedoch die gleiche Menge Kleie und setzt dem Gemisch 2 g Oxalsäure zu. Die Zerreißfestigkeit der erhaltenen Platte beträgt 8 N/mm$^2$, ihre Abbauzeit im Boden 7 Monate.

### Beispiel 6

Man arbeitet auf die im Beispiel 3 beschriebene Weise, setzt dem Gemisch jedoch keinen Harnstoff zu. Das Produkt läßt sich durch Pressen nur verarbeiten, wenn man das Preßwerkzeug nach dem Pressen kühlt. Das Material kann jedoch im Spritzguß, durch Spritzpressen oder auf dem Kalander gut verarbeitet werden. Das aufgearbeitete Produkt wird bei Erwärmen wieder weich und formbar.

### Beispiel 7

72 g Maisstärke werden mit 18 ml einer 37 gew.-%-igen wäßrigen Formaldehydlösung und unmittelbar danach mit 18 ml gesättigter wäßriger Harnstofflösung (Konzentration: 57 g/100 ml) vermischt. Nach Zusatz von 0,01 g Natriumstearat, 0,1 g Natriumbicarbonat und 23 ml Wasser wird das anfangs dünnflüssige Gemisch innerhalb einiger Sekunden dick und muß deshalb weiterhin intensiv gerührt werden. Die dicke Masse wird noch 40 Minuten lang gerührt, dann bei 50°C getrocknet und in einer Kugelmühle zu Staub gemahlen. Das erhaltene Pulver wird in einem auf 190°C geheizten Werkzeug unter einem Druck von 310 kp/cm$^2$ zu einer Platte gepreßt, deren Zerreißfestigkeit 19 N/mm$^2$ beträgt. In Wasser getaucht wird die Platte in 24 Stunden weich, ihre Abbauzeit im Boden beträgt 8 Wochen.

Beispiel 8

Man arbeitet auf die im Beispiel 7 beschriebene Weise, verwendet jedoch statt Maisstärke Kartoffelstärke und setzt weitere 25 ml Wasser zu. Die Eigenschaften des Produktes stimmen mit denen des gemäß Beispiel 6 erhaltenen überein.

Beispiel 9

Man arbeitet auf die im Beispiel 7 beschriebene Weise, setzt jedoch statt Harnstoff die wäßrige Lösung von 6 g Melamin zu. Die Platte hat eine Zerreißfestigkeit von 20 N/mm². Sie wird im Boden innerhalb von 20 Wochen abgebaut.

Beispiel 10

80 g Weizenstärke, 80 ml gesättigte wäßrige Harnstofflösung (Konzentration: 57 g/100ml), 80 ml einer 37 Gew.-%-igen wäßrigen Formaldehydlösung, 0,01 g Natriumstearat und 0,1g Natriumbicarbonat werden miteinander vermischt. Das Gemisch wird innerhalb von 10 Minuten fest. Es wird zerkrümelt und 3 Tage lang an der Luft getrocknet, wobei das Produkt gummiartig wird. Es wird bei 70°C 8 Stunden lang getrocknet, wobei es erhärtet, und dann in einer Hammermühle zu Staub gemahlen. Das Pulver wird in einem auf 200°C geheizten Werkzeug unter einem Druck von 450 kp/cm² zu einer Platte gepreßt, deren Zerreißfestigkeit 27 N/mm² beträgt. In Wasser erweicht die Platte innerhalb von 200 Stunden, ihre Abbauzeit im Boden beträgt 4 Monate.

Beispiel 11

113 g Maisstärke und 113 g extrahiertes Sojamehl werden miteinander vermischt. Dann wird ein Gemisch aus 210 ml neutralisierter 37 gew.-%-iger wäßriger Formaldehydlösung, 87 g Harnstoff und 70 ml Wasser zugegeben. Ferner werden 0,3 g Natriumstearat, 0,6 g Natriumbicarbonat und 50 ml Wasser zugesetzt. Das Gemisch wird 30 Minuten lang gerührt, anschließend getrocknet und dann gemahlen. Die aus dem Pulver gepreßte Platte hat eine Zerreißfestigkeit von 18 N/mm², sie wird im Boden innerhalb von 10 Monaten abgebaut.

Beispiel 12

Ein Gemisch aus 290 g Maismehl, 130 ml gesättigter wäßriger Harnstofflösung (Konzentration: 57 g/100 ml), 0,04 g Natriumstearat, 0,4 g Natriumbicarbonat und 125 ml Wasser wird 30 Minuten lang gerührt, dann bei 50°C getrocknet und auf der Strangpresse granuliert. Der erhaltene Stoff ist thermoplastisch. Ein aus dem Granulat durch Spritzguß hergestellter Becher wird im Boden innerhalb von 6 Wochen abgebaut.

Beispiel 13

Man arbeitet auf die im Beispiel 11 beschriebene Weise, setzt dem Gemisch jedoch statt des Harnstoffes und des Wassers 75 ml einer 37 gew.-%-igen wäßrigen Formaldehydlösung zu und trocknet bei 70°C, bis der nicht gebundene Formaldehyd ausgetreten ist. Eine aus dem Granulat bereitete Probe ist thermoplastisch. Das Produkt wird im Boden innerhalb von 3 Wochen abgebaut.

**Ansprüche**

1.) Verfahren zur Herstellung von Kunststoffrohstoffen durch Umsetzen von Amino- oder Hydroxygruppen aufweisenden, aus Pflanzensamen gewonnenen Produkten, dadurch gekennzeichnet, daß man, vorzugsweise bei Temperaturen von 10 bis 30°C,

a) 1 oder mehr Aminogruppen aufweisende[s], aus Pflanzensamen gewonnene[s] Ausgangsprodukt(e) in wäßrigem Medium mit 1 oder mehr Oxoverbindung(en) und gegebenenfalls gleichzeitig oder anschließend mit 1 oder mehr Aminogruppen aufweisenden Verbindung(en) umsetzt oder

b) 1 oder mehr Hydroxygruppen aufweisende[s], aus Pflanzensamen gewonnene[s] Ausgangsprodukt(e) in wäßrigem Medium mit 1 oder mehr Aminogruppen aufweisenden Verbindung(en) und gegebenenfalls gleichzeitig oder anschließend mit 1 oder mehr Oxoverbindung(en) umsetzt und/oder gegebenenfalls den beziehungsweise die so erhaltenen makromolekularen Stoff(e) mit 1 oder mehr Oxoverbindung(en) zur Reaktion bringt oder

c) 1 oder mehr Hydroxygruppen aufweisende[s], aus Pflanzensamen gewonnene[s] Ausgangsprodukt(e) in wäßrigem Medium mit 1 oder mehr Oxogruppen aufweisenden Verbindung(en) und gegebenenfalls gleichzeitig oder anschließend mit 1 oder mehr Aminogruppen aufweisenden Verbindung(en) umsetzt und/oder gegebenenfalls den beziehungsweise die so erhaltenen makromolekularen Stoff(e) mit 1 oder mehr Aminogruppen aufweisenden Verbindung(en) zur Reaktion bringt, sowie den beziehungsweise die so erhaltenen makromolekularen Stoff(e) in an sich bekannter Weise zu Kunststoffrohstoffen zubereitet beziehungsweise formt.

2.) Verfahren nach Anspruch 1, dadurch gekennzeichnet daß man das Zubereiten beziehungsweise Formen des beziehungsweise der als Reaktionsprodukt(e) erhaltenen makromolekularen Stoffe[s] zu Kunststoffrohstoffen durch Zusatz von 1 oder mehr Gleitmittel(n), Stabilisator(en) und/oder Farbstoff(en) sowie Homogenisieren durchführt.

3.) Verfahren nach Anspruch 1 oder 2, dadurch gekennzeichnet, daß man als Oxoverbindung(en) [ein] Aldehyd(e) und/oder Keton(e) verwendet.

4.) Verfahren nach Anspruch 1 bis 3, dadurch gekennzeichnet, daß man als Aminogruppen aufweisende Verbindung(en) Harnstoff und/oder Melamin verwendet.

5.) Verfahren nach Anspruch 1a) oder 2 bis 4, dadurch gekennzeichnet, daß man als aus Pflanzensamen gewonnene[s] Ausgangsprodukt(e) Mehl und/oder Kleie verwendet.

6.) Verfahren nach Anspruch 1b) oder 1c) oder 2 bis 4, dadurch gekennzeichnet, daß man als aus Pflanzensamen gewonnenes Ausgangsprodukt Stärke verwendet.

7.) Verfahren nach Anspruch 1a) oder 2 bis 5, dadurch gekennzeichnet, daß man je 100 g aus Pflanzensamen gewonnene[s] Ausgangsprodukt(e) 0,3 bis 1 Mol der Oxoverbindung(en) und 0,4 bis 3 Mol der gegebenen falls verwendeten Aminogruppen aufweisenden Verbindung(en) einsetzt.

8.) Verfahren nach Anspruch 1b) oder 2 bis 4, dadurch gekennzeichnet, daß man je 100 g aus Pflanzensamen gewonnene[s] Ausgangsprodukt(e) 0,15 bis 1,5 Mol der Aminogruppen aufweisenden Verbindung(en) und 0,18 bis 3,0 Mol der gegebenenfalls verwendeten Oxoverbindung(en) einsetzt.

9.) Verfahren nach Anspruch 1c) oder 2 bis 4, dadurch gekennzeichnet, daß man je 100 g aud Pflanzensamen gewonnene[s] Ausgangsprodukte(e) 0,18 bis 3,0 Mol der Oxoverbindung(en) und 0,15 bis 1,5 Mol der gegebenenfalls verwendeten Aminogruppen aufweisenden Verbindung(en) einsetzt.

10.) Verfahren nach Anspruch 1 bis 9, dadurch gekennzeichnet, daß man als Ausgangsprodukte ein Gemisch aus 1 oder mehr Hydroxygruppen aufweisenden und Aminogruppen aufweisenden, aus Pflanzensamen gewonnenen Ausgangsprodukten verwendet.

**Europäisches Patentamt**

# EUROPÄISCHER RECHERCHENBERICHT

Nummer der Anmeldung

## EP 90 11 4651

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-2 555 058 (L. ROUZET) <br> * Spalte 1, Zeilen 6-29; Spalte 2, Zeilen 1-8 * <br> — — — | 1-6 | C 08 B 31/00 <br> C 08 H 1/02 |
| A | FR-A-8 200 43 (INTERNATIONAL PATENTS DEVELOP-MENT CO.) <br> * Seite 2, Spalte 1, Zeilen 27-32,43-52, Spalte 2, Zeilen 99-104; Seite 3, Spalte 1, Zeilen 1-29; Seite 5, Spalte 1, Zeilen 37-41 * <br> — — — | | |
| A | FR-A-2 160 965 (CELLCOR CORP. OF CANADA LTD) <br> * Seite 2, Zeilen 1-8; Seite 3, Zeilen 28-39; Seite 4, Zeilen 21-29; Seite 6, Zeilen 32-38; Beispiel 2 * <br> — — — — — | | |

### RECHERCHIERTE SACHGEBIETE (Int. Cl.5)

C 08 H
C 08 G
C 08 B

Der vorliegende Recherchenbericht wurde für alle Patentansprüche erstellt

| Recherchenort | Abschlußdatum der Recherche | Prüfer |
|---|---|---|
| Den Haag | 24 Oktober 90 | MAZET J.-F. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument